# EUROPEAN PATENT SPECIFICATION

(11) **EP 0 614 857 B1**
(45) Date of publication and mention of the grant of the patent: **16.09.1998**
(21) Application number: 94200600.8
(22) Date of filing: 08.03.1994
(51) Int. Cl.: C03C 17/00, C03C 19/00

(54) **Apparatus and method for providing a film on a sheet of glass, and the sheet of glass thus obtained**
Verfahren und Vorrichtung zur Beschichtung einer Glasscheibe und auf diese Weise hergestellte Glasscheibe
Procédé et dispositif pour déposer une couche sur un vitrage et le vitrage ainsi obtenu

(30) Priority: 12.03.1993 NL 9300447
(43) Date of publication of application: 14.09.1994
(73) Proprietor: BIWEX N.V., NL-5015 BS Tilburg (NL)
(72) Inventor: Bos, Gerrit, NL-4817 VE Breda (NL)
(74) Representative: Eveleens Maarse, Pieter

(56) References cited:
- EP-A- 0 448 456
- GB-A- 536 048
- US-A- 2 883 799
- PATENT ABSTRACTS OF JAPAN vol. 47, no. 11 (C-403)13 February 1987 & JP-A-61 209 927 (FUJIKURA KASEI KK) 18 September 1986
- DATABASE WPI Week 8739, Derwent Publications Ltd., London, GB; AN 87-274411 & JP-A-62 191 447 (STANLEY ELEC. K.K) 21 August 1987
- JOURNAL OF NON-CRYSTALLINE SOLIDS AMSTERDAM NL pages 111 - 117 R.L. RONCONE ET AL. 'EMBOSSED GRATINGS IN SOL-GEL WAVEGUIDES: PRE-EMBOSS HEAT TREATMENT EFFECTS'

## Description

The invention relates to a method for manufacturing substantially flat sheets of glass slightly roughened on at least one side.

Such sheets of glass are generally known in the form of glass sheets which are used in slide transparency frames, and wherein one side of the glass sheets is roughened to prevent occurrence of the Newton effect between the inner surface of the sheet of glass and the slide.

Such roughened glass is otherwise also known in the form of non-reflecting glass as often used in the framing of pictures, or in the form of diverse types of frosted glass.

In order to manufacture such types of glass use is made according to the prior art of acids which apply an etching effect on the surface of the sheet of glass and thus cause a roughening of the surface of the sheet of glass.

It will be apparent that in order to etch glass particularly strong acids are necessary which, because of their aggressiveness, result in great problems; they even attack glass, cause danger to health and are particularly undesirable from an environmental viewpoint. All these factors result in an increase in the cost price of thus treated glass.

GB-A-536048 describes a method wherein glass is etched.

It is noted that from the article "Embossed gratings in sol-gel waveguides: pre-emboss heat treatment effects", Journal of Non-crystalline Solids, Amsterdam NL, a method is known for manufacturing substantially flat sheets of glass slightly roughened on at least one side, comprising applying to a sheet of glass a transparant film of SiO₂-TiO₂ in liquid form which is different from glass and which has a slightly roughened surface, and curing the film. In this prior art method the film is partly baked or cured, subsequently embossed or stamped and finally baked and cured to obtain the required hardness.

This is a cumbersome method which is difficult to execute in mass production.

The invention provides in a method wherein the transparant material is UV-curable and wherein during curing the film is in contact with a stamp having the relevant roughness.

This allows an easier mass production.

This method results in a substantially flat glass which is provided with at least one roughened side and which is characterized by a film applied to at least one side of the glass of transparent material which does not correspond with glass and which is provided with a roughened surface.

Another advantage of thus treated glass is that the glass is insensitive on the treated side for the greyish haze otherwise occurring in glass. In a process extending over years Na atoms leave the glass, whereby the transparency decreases and a grey haze results. By applying a film on the glass according to the invention this process is prevented on the relevant side.

DATABASE WPI Week 8739, Derwent Publications Ltd., London, GB, discloses a method for manufacturing substantially flat sheets of glass slightly roughened at one side, wherein a film is applied to the glass, and after application, said film is subsequently etched.

Besides the etching of glass, GB-A-536048 also shows a method for applying a layer of a material not being glass to the glass by immersion of the glass in a liquid and subsequently heating the glass.

Further, Patent Abstracts of Japan volume 47, number 11 (C-403)13, February 1987, discloses the application of a matt film to glass bottles. However, no embossing stap is used to obtain a roughened surface.

The invention likewise relates to an apparatus for manufacturing glass which is provided on at least one side with a film of transparent material which is different from glass and has a rough surface, comprising a device for applying a thin film of material curing when heat or radiation is supplied, a stamp of which the surface has a roughness corresponding with the desired roughness of the transparent film, means for placing the stamp in contact with the film of curing material for at least a short time, and at least one heat or radiation source, arranged for supplying heat or radiation to the layer of curing material while this is in contact with the stamp.

The present invention will now be elucidated with reference to the annexed drawings, in which:
fig. 1 shows a schematic perspective view of a first embodiment of the invention;
fig. 2 shows a schematic perspective view of a second embodiment of the invention;
fig. 3 shows a schematic perspective view of a third embodiment of the invention; and
fig. 4 shows a perspective view of a variation of a profile roller to be used with the embodiment shown in figs. 1 and 2.

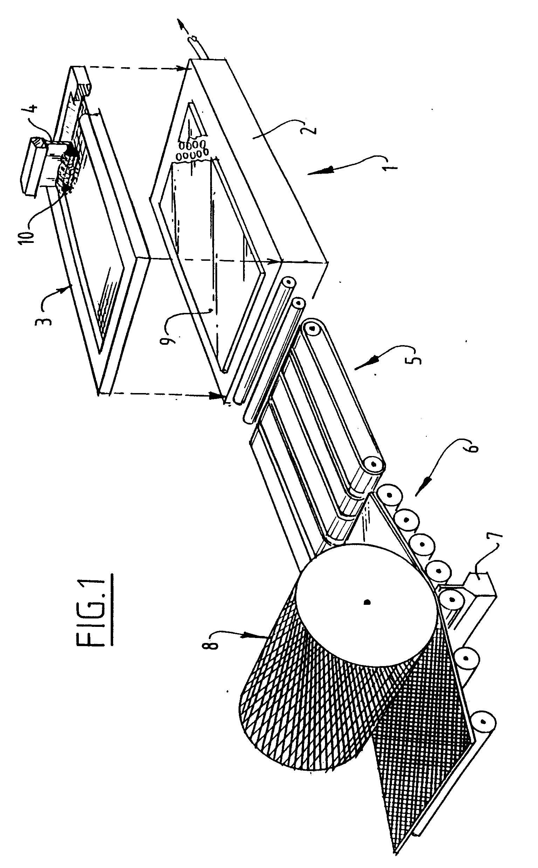

The apparatus shown in fig. 1 comprises a screen printing device 1 which is formed by a table 2 and a screen printing frame 3 present thereabove and movable in substantially vertical direction, and on the top of which a squeegee 4 is movable in substantially horizontal direction.

Following on from the table 2 is a conveyor belt 5, followed by a number of rollers 6. A laser exposure device 7 is arranged between two rollers 6. Arranged precisely above the laser exposure device 7 is a profiled roller 8, the roughness of which corresponds with the desired roughness of the sheet of glass for treating.

The operation of this apparatus will be described below.

Sheets of glass 9 for treating are placed on table 2, whereafter the screen printing frame 3 is placed on the table.

By means of squeegee 4 a quantity of the mass 10 for curing is then arranged on the sheet of glass 9 for treating, whereafter the latter is fed by means of conveyor belt 5 to the series of rollers 6.

When the sheet of glass 9 has reached the series of rollers 6 the laser exposure device 7 is switched on, wherein the sheet of glass **9** is in contact with the profiled roller 8. Curing of the curable mass 10 by the laser light source 7 thus takes place while the mass is in contact with profiled roller 8.

It should be noted here that with the use of a profiled roller 8 of which the radius is smal, the profiled roller 8 is only in contact with the mass for curing over a very short path, so that curing must take place over a very short trajectory. This implies that the curing light source must have a high intensity, so that use of a laser light source offers great advantages here.

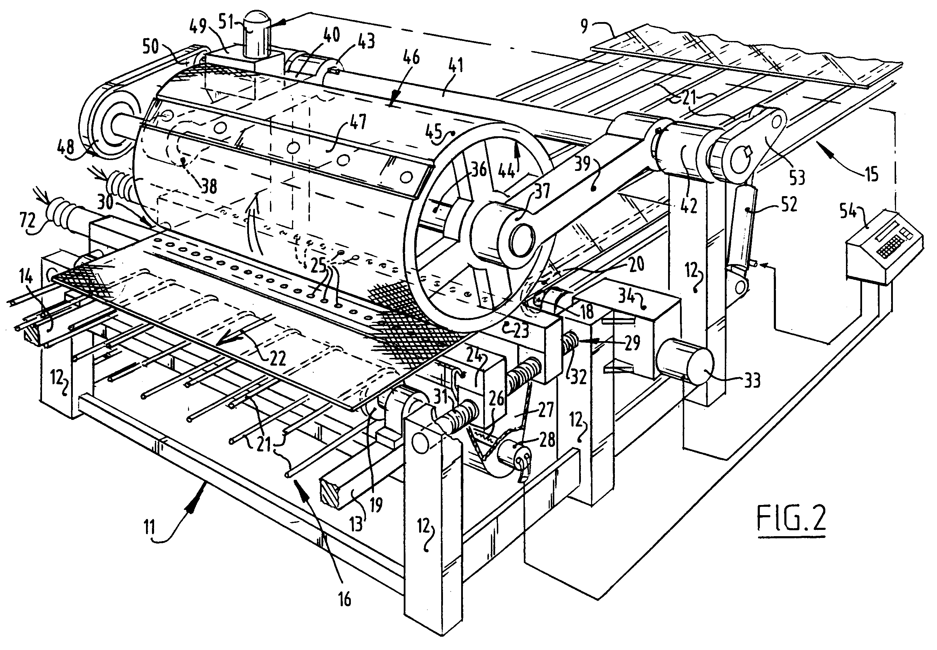

In fig. 2 a second embodiment of the apparatus according to the invention is shown. This embodiment comprises a frame 11 with legs 12, connected at their upper sides by spars 13,14. On the spars a first conveying apparatus 15 has been provided just as a second conveying apparatus 16.

Each conveying apparatus comprises two shafts, of which only one, 17, 18 respectively is shown, on each of which a roller 19, 20 respectively has been provided. Around each pair of rollers conveying belts 21 are wrapped, which extend through grooves provided in the rollers 19,20. With the help of the conveying apparatuses 15,16 thus provided, glass plates 9 can be conveyed in the direction of the arrow 22. It is however possible to make use of conveying apparatuses of other kinds, for instance of so-called vacuum conveying apparatuses, which allow - also with substantial accelerations - a positive positioning.

The glass plates are already provided of a layer of material curing under the influence of UV-light by means of an applying apparatus, as has been described with the help of fig. 1. The glass plates are then conveyed from the first conveying apparatus 15 to the second conveying apparatus 16 between which a certain space is provided.

During the conveyance over this space, the glass plates 9 are supported by two bars 23, 24 respectively. In the upper side of each of the bars holes 25 have been provided, whereas the bars comprise supply means to supply compressed air to the interior of the bars. These supply means comprise a compressor not depicted in the drawings which is connected with both bars 23,24 by means of flexible pipes 72. The compressed air supplied through these means is expelled through the series of holes 25, so that an air cushion develops which supports the glass plates 9 during the conveyance over the space between both conveying apparatuses 15,16, and which also decreases the friction and serves as cooling agent. It is possible to connect the holes by means of grooves.

To expose the glass plate from the upper side wherein this glass plate has been provided with a film of material curing under the influence of light at its upper side an exposure apparatus has been provided underneath the bars 23,24 which exposure apparatus comprises a flash tube which is provided in a reflector 27. The flash tube has been arranged for generating light within the UV-spectrum. The material or mass curing under the influence of light has such a composition, that it cures under the influence of the UV-light. Of course it is possible to make use of materials curing under the influence of light belonging to another spectrum, for instance X-rays or infrared light.

The flash tube received supply through wires 28 from a high voltage supply apparatus not depicted in the drawing. The flash tube has been arranged for flashing with such a high frequency, that for the application in the present invention it can be regarded as supplying light continuously.

For curing the mass requires of course a certain amount of light. When the speed of transport of the glass plates is high, less light is supplied to a certain unit of the curable mass than in the case in which the speed is low. To compensate this effect the bars 23, 24 respectively are movable in the direction of transport of the glass plate such, that the space of the aperture between the bars is adjustable. Thus a kind of aperture effect is obtained. By moving the bars 23,24 towards each other the aperture becomes more narrow, and by moving the bars from each other the aperture becomes wider.

To obtain this adjustability of the bars 23,24 both bars are together mounted on a spindle 29, 30 respectively. Each of the spindles 29,30 has a part with a right hand thread 31 and a part with a left hand thread 32. By rotating the spindles 29,30 both bars 23,24 are moved towards each other, from each other respectively. For driving both spindles 29,30 use is made of an electro motor 23 which is connected with a spindle 29 by means of a gear box 24. For driving the spindle 30 use is made of a mechanical connection not depicted in the drawing for instance a shaft extending over the width of the apparatus. It is noted that it is of utmost importance that both spindles are moved simultaneously to avoid skewing of the aperture.

For the invention it is however not only necessary that the material applied unto the glass plates 9 cures under the influence of light or radiation, but that the curing takes places, when it is in contact with a stamp imposing the roughness concerned. In the embodiment shown in fig. 2 the stamp has the shape of a hollow cylinder which is indicated generally with 35. The hollow cylinder is journalled on a shaft 36, being journalled in bearings 37, 38 respectively which have been provided in carrying arms 39, 40 respectively. The carrying arm 39,40 are journalled on a shaft 31, extending in bearings 42, 43 respectively which are connected with extensions of a pair of legs 12 located oppositely.

The hollow cylinder per se comprises a hollow cylinder 44 made of a rigid material, for instance steel, on the outside whereof a rather thick layer of flexible material has been provided. At the outer side of the flexible layer 45 a metal plate 46 has been provided which at its outer side has been provided with a rough pattern, of which the roughness equals the required roughness of the layer to be provided unto the glass. This metal plate 46 is so thin, that one should speak of a foil, so that it has a substantial elasticity and flexibility. To attach the plate 46 use is made of an attachment strip 47. To drive the hollow cylinder 35 the shaft 36 has been provided with an extension onto which a pulley 48 has been provided, whereas on the carrier arm 40 a gear box 49 has been attached on the outgoing shaft whereof a second pulley 50 has been located. A belt 51 has been wrapped around both pulleys 48,50. The gear box 49 is driven by means of an electro motor 52.

When the glass plates 9 are not supplied continuously, it is necessary to move the hollow cylinder 35 in its whole upwardly. Therefore use is made of a lineair driving device in the form of a pneumatic cylinder 52 which, of course, can also be implemented as a hydraulic cylinder and of which the piston rod 53 is connected with a leaver 53 connected on the shaft 41. This does not only allow to move the hollow cylinder 44 upwardly, which besides is also necessary for for instance clearing, but also for controlling the pressure exerted by the cylinder unto the glass plates.

Care it taken that this pressure is so large that the deformation of the flexible layer 45 is so large that the metal plate 46 is in touch with the glass plate over a great as possible part of the width of the aperture between the bars 23,24, so that the curing process can take place in contact with the stamp concerned. Instead of compensating the gravity at least partially by means of the lineair driving device 52 it is possible to extend the bearing arms 39,40 at the other side of the shaft 41 and to mutually connect both extensions. On the connection element counter weights can be located for adjusting the pressure with which the roller 35 presses onto the glass plate. For temporarily lifting the roller 35 from the glass plate use can be made of an external excenter mechanism.

Finally a control apparatus is present in the shape of a handling apparatus 54 which can be implemented for instance as a computer, and which has been arranged for controlling the driving of the motor 52 for driving the hollow cylinder, the driving of the motors not depicted in the drawing for driving both conveying apparatuses, the control of the supply of the flashing tube, the control of the motor 23 to adjust the width the aperture between the bars 23 and 24 and the control of the lineair driving apparatus 52. Thus said process can be controlled in a great way.

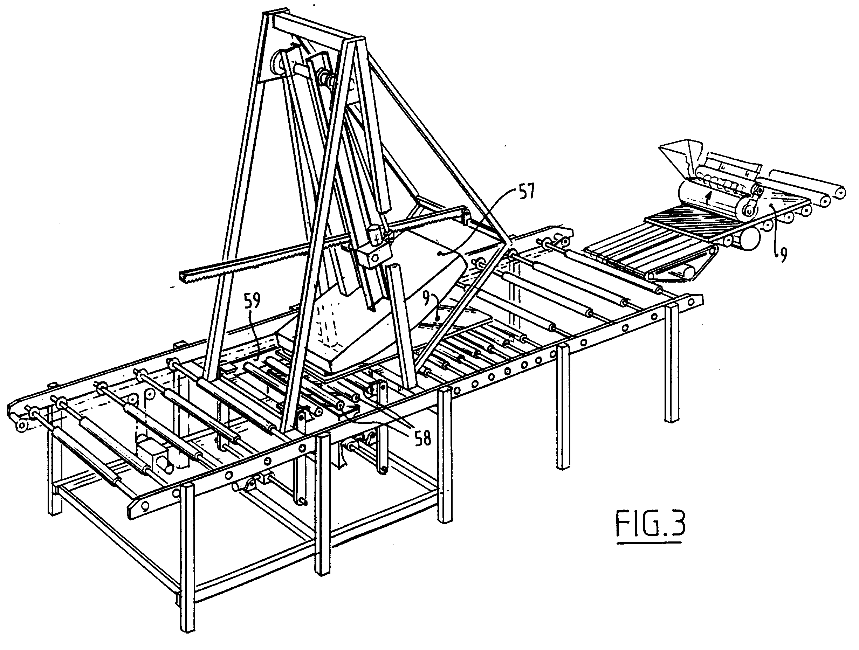

Fig. 3 shows a last embodiment of the apparatus according to the invention. Herein the screen printing apparatus depicted in fig. 1 has been provided by an apparatus which provides the curable mass on the glass plates 9 by means of a roller 55 which glass plates are subsequently conveyed by conveying means to the curing apparatus per se, and which comprise conveying means in the shape of rollers 56 and in which the stamp has the shape of a circle segment 57 which makes a reciprocating movement and in which the rollers present under the circle segment are movable in the vertical direction, as they are located in a subframe 59. Care is taken that the glass plate is pressed to the stamp with a predetermined pressure. The stamp has in this embodiment also the shape of a glass plate. Further, this apparatus deviates only in minor details from the apparatus depicted in fig. 2.

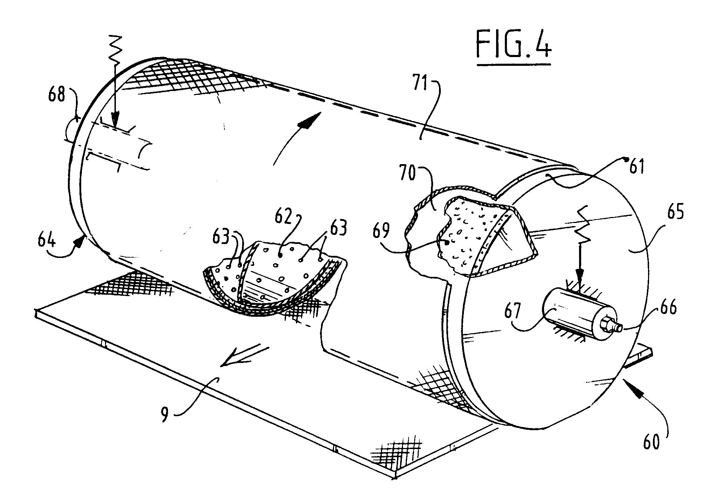

Finally fig. 4 shows an alternative embodiment of the profiled roller. This profiled roller 60 comprises a hollow cylinder 61 in the curved surface 62 whereof holes 63 have been provided. The head walls 64,65 of the cylinder 61 are closed with the exception of a connection piece 66 for connecting with a vacuum pump which connection piece has been provided on one of the shaft stumps 67, 68 respectively. Further, a layer of elastic, flexible material 69 has been provided around the curved surface 62 which for instance is made of rubber, around which layer of air tight flexible material 70 has been provided, for instance in the form of plastic. The air tight flexible material is air tightly connect to both head walls 64,65. Around the cylinder thus constructed a hollow cylinder can be provided, which has the shape of the sleeve which is common in graphical engineering. This sleeve has been provided with a rough pattern at its outside. The sleeve is made from high quality material with a substantial thinness. The location around the cylinder takes place by applying a vacuum in the internal parts of the hollow cylinder 61, so that the cross section thereof decreases, and the sleeve can be brought to its location. Subsequently, this vacuum is taken away, after which the sleeve is fixed. By the tension present in the sleeve, which is compensated by the expansion of the layer 69 the whole becomes such a elasticity that it is possible to have the sleeve in contact with the glass plate over several centimeters which is of utmost importance of the curing process. Folds in the sleeve are avoided.

It will likewise be apparent that the diverse components of both embodiments can be combined with each other. It is therefore possible to combine the first embodiment with a screen printing device.

## Claims

1. Method for manufacturing substantially flat sheets of glass (9) slightly roughened on one side, comprising applying to a sheet of glass a film of transparent material not corresponding with glass, and having a slightly roughened surface, wherein the film is applied in liquid form and the film is subsequently cured, **characterized in that** the transparent material is UV-curable and that during curing the film is in contact with a stamp having the relevant roughness.

2. Substantially flat glass (9) provided with at least one roughened surface, **characterized in that** it has been prepared according to the method of claim 1.

3. Glass (9) as claimed in claim 1, **characterized in that** the glass is fit for application in slide frames.

4. Glass (9) as claimed in claim 3, **characterized in that** the roughness of the film (10) is such that when used in holders for transparencies the glass (9) prevents the Newton effect occurring between glass (9) and transparency.

5. Apparatus for manufacturing glass (9) which is provided on at least one side with a film (10) of transparent material which is different from glass and has a rough surface**, characterized by** a device (3,4;55) for applying a thin film (10) of material curing when heat or radiation is supplied, a stamp (8;46;57) of which the surface has a roughness corresponding with the desired roughness of the transparent film (10), means (36,37,38) for placing the stamp (8;46;57) in contact with the film (10) of curing material for at least a short time, and at least one heat or radiation source (7;26), which has been arranged for providing heat or radiation to the film (10) of curing material, while it is in contact with the stamp (8;46;57).

6. Apparatus as claimed in claim 5, **characterized** **by** a transporting device (15,16) for causing the sheets of glass (8) for treating to move forward in substantially horizontal direction, wherein the stamp (46,53) is formed in accordance with at least a segment of a cylinder, the axis of which extends perpendicularly of the transporting direction (22), and a device (39,40,41) for placing the sheet of glass (8) in contact with the stamping surface (46;57), wherein the heat or radiation source (7;26) is placed such that it irradiates the glass (8) when this is in contact with the stamp (46;57), and wherein as seen in the transporting direction (22) members (23,24) are arranged on the front and rear side of the radiation source (7;26) for absorbing the pressure exerted by the stamp (46;57).

7. Apparatus as claimed in claim 6**, characterized in that** the stamp (46) comprises: a rigid cylinder (44); a layer of flexible material (45) provided on the curved surface of the cylinder, and a metal plate (46) provided on the outer surface of the layer of flexible material (45) and of which the surface is roughened according to the roughness of the transparent film (10).

8. Apparatus as claimed in claim 7, **characterized in that** the metal plate (46) is a seamless sleeve shrinked onto the layer of flexible material.

9. Apparatus according to claim 8, **characterized in that** the the cylinder (46) is closed at its heads, that a plug for connection with a vacuum source is provided, that the curved surface of the cylinder is perforated, and that between the sleeve and the layer of flexible matwerial an airtight layer has been provided which is connected airtightly with the heads of the cylinder.

10. Apparatus as claimed in claim 7, 8 or 9, **characterized by** means (48,49,50,51) for causing to excert the stamp (46) such a force to the glass plate (10) that the glass plate (10) is driven in the direction of transport.

11. Apparatus as claimed in one of the claims 6-10, **characterized in that** between the source of radiation (26) and the glass plate (8) at the location where it is in contact with the stamp (46) an aperture (between 23 and 24) extending over at least the full length of the glass plate (10) has been provided, and of which the width is variable.

12. Apparatus as claimed in claim 11, **characterized by** means (32) for adjusting the width of the aperture in accordance with the speed of transport.

13. Apparatus as claimed in one of the claims 6-12, **characterized by** means for suspending the glass plate (8) at the location of the stamp (46) by means of an air cushion.

## Patentansprüche

1. Verfahren zum Herstellen im wesentlichen ebener Glasplatten (9), die auf der einen Seite leicht aufgerauht sind, mit dem Aufbringen eines Films aus transparentem Material, das nicht mit Glas übereinstimmt und eine leicht aufgerauhte Oberfläche hat, auf eine Glasplatte, worin der Film in flüssiger Form aufgebracht wird und der Film nachfolgend ausgehärtet wird, dadurch gekennzeichnet, daß das transparente Material UV-aushärtbar ist, und daS während des Aushärtens der Film in Berührung mit einem Stempel steht, der die relavente Rauhheit aufweist.

2. Im wesentlichen ebenes Glas (9), das mit mindestens einer aufgerauhten Oberfläche versehen ist, dadurch gekennzeichnet, daß es nach dem Verfahren des Anspruchs 1 hergestellt wurde.

3. Glas (9) wie beansprucht in Anspruch 1, dadurch gekennzeichnet, daß das Glas zur Anwendung in Diarahmen eingerichtet ist.

4. Glas (9) wie beansprucht in Anspruch 3, dadurch gekennzeichnet, daß die Rauhheit des Films (10) so ist, daß, wenn es in Haltern für Diapositive verwendet wird, das Glas (9) die Newtonringe daran verhindert, die zwischen dem Glas (9) und dem Diapositiv aufzutreten.

5. Vorrichtung zum Herstellen von Glas (9), das auf mindestens einer Seite mit einem Film (10) aus transparentem Material versehen ist, das sich von Glas unterscheidet und eine rauhe Oberfläche aufweist, gekennzeichnet durch eine Vorrichtung (3, 4; 55) zum Auftragen eines dünnen Films (10) des Materials, das aushärtet, wenn Wärme oder Strahlung zugeführt wird, einen Stempel (8; 46; 57), von dem die Oberfläche eine Rauhheit aufweist, die der gewünschten Rauhheit des transparenten Films (10) entspricht, Mittel (36, 37, 38), um den Stempel (8; 46; 57) in Berührung mit dem Film (10) aus aushärtendem Material für mindestens eine kurze Zeit zu verbringen, und mindestens eine Wärme- oder Strahlungsquelle (7; 26), die dazu eingerichtet ist, um Hitze oder Strahlung auf den Film (10) aus aushärtendem Material aufzubringen, während er in Berührung mit dem Stempel (8; 46; 57) steht.

6. Vorrichtung wie beansprucht in Anspruch 5, gekennzeichnet durch eine Fördervorrichtung (15, 16), um die Glasplatten (8) zu veranlassen, sich für die Behandlung in im wesentlichen horizontaler Richtung vorwärts zu bewegen, worin der Stempel (46, 53) in Übereinstimmung mit mindestens einem Segment eines Zylinders ausgebildet ist, dessen Achse sich senkrecht zur Förderrichtung (22) erstreckt, und eine Vorrichtung (39, 40, 41), um die Glasplatte (8) in Berührung mit der Stempeloberfläche (46; 57) zu verbringen, worin die Wärme- oder Strahlungsquelle (7; 26) so angeordnet ist, daß sie das Glas (8) bestrahlt, wenn es in Berührung mit dem Stempel (46; 57) steht, und worin, in Förderrichtung (22) gesehen, Teile (23, 24) an der Vorder- und Rückseite der Strahlungsquelle (7; 26) angeordnet sind, um den Druck aufzunehmen, der vom Stempel (46; 57) ausgeübt wird.

7. Vorrichtung wie beansprucht in Anspruch 6, dadurch gekennzeichnet, daß der Stempel (46) die folgenden Merkmale aufweist: einen steifen Zylinder (44), eine Lage aus flexiblem Material (45), die auf der gekrümmten Oberfläche des Zylinders vorgesehen ist, und ein Metallblech (46), das auf der Außenoberfläche der Lage aus flexiblem Material (45) vorgesehen ist und dessen Oberfläche entsprechend der Rauhigkeit des transparenten Films (10) aufgerauht ist.

8. Vorrichtung wie beansprucht in Anspruch 7, dadurch gekennzeichnet, daß das Metall (46) eine nahtlose Hülse ist, die auf die Lage aus flexiblem Material aufgeschrumpft ist.

9. Vorrichtung nach Anspruch 8, dadurch gekennzeichnet, daß der Zylinder (46) an seinen Köpfen geschlossen ist, daß ein Anschlußglied zur Verbindung mit einer Vakuumquelle vorgesehen ist, daß die gekrümmte Oberfläche des Zylinders perforiert ist, und daß zwischen der Hülse und der Schicht aus flexiblem Material eine luftdichte Schicht vorgesehen ist, die luftdicht mit den Köpfen des Zylinders verbunden ist.

10. Vorrichtung wie beansprucht in dem Anspruch 7, 8 oder 9, gekennzeichnet durch Mittel (48, 49, 50, 51), um den Stempel (46) zu veranlassen, auf die Glasplatte (10) eine solche Kraft auszuüben, daß die Glasplatte (10) in Förderrichtung angetrieben wird.

11. Vorrichtung wie beansprucht in einem der Ansprüche 6 bis 10, dadurch gekennzeichnet, daß zwischen der Strahlungsquelle (26) und die Glasplatte (8) an der Stelle, an der sie mit dem Stempel (46) in Berührung steht, eine Blende (zwischen 23 und 24) vorgesehen ist, die sich über mindestens die volle Länge der Glasplatte (10) erstreckt, und deren Breite variabel ist.

12. Vorrichtung wie beansprucht in Anspruch 11, gekennzeichnet durch Mittel (32) zum Einstellen der Breite der Blende in Übereinstimmung mit der Fördergeschwindigkeit.

13. Vorrichtung wie beansprucht in einem der Ansprüche 6 bis 12, gekennzeichnet durch Mittel zum Aufhängen der Glasplatte (8) an der Stelle des Stempels (46) mittels eines Luftpolsters.

## Revendications

1. Procédé de fabrication de plaques de verre (9) sensiblement plates rendues légèrement rugueuses sur une face, comprenant le fait d'appliquer, sur une plaque de verre, un film en matériau transparent qui n'est pas du verre, et possédant une surface légèrement rugueuse, dans lequel le film est appliqué sous forme liquide et le film est sensiblement durci, caractérisé en ce que le matériau transparent est susceptible d'être durci par rayons ultraviolets, et en ce que, lors du durcissement, le film est en contact avec un poinçon présentant la rugosité souhaitée.

2. Verre (9) sensiblement plat, pourvu d'au moins une surface rugueuse, caractérisé en ce qu'il a été préparé selon le procédé de la revendication 1.

3. Verre (9) selon la revendication 1, caractérisé en ce que le verre est adapté à être utilisé dans des cadres de diapositives.

4. Verre (9) selon la revendication 3, caractérisé en ce que la rugosité du film (10) est telle que, lorsqu'il est utilisé dans des supports pour diapositives, le verre (9) empêche l'apparition de l'effet de Newton entre le verre (9) et la diapositive.

5. Appareil de fabrication de verre (9) qui est pourvu, sur au moins une face, d'un film (10) de matériau transparent qui n'est pas du verre et présente une surface rugueuse, caractérisé par un dispositif (3, 4 ; 55) pour appliquer un mince film (10) de matériau durcissant en présence de chaleur ou de radiations, un poinçon (8 ; 46 ; 57) dont la surface présente une rugosité correspondant à la rugosité souhaitée du film transparent (10), des moyens (36, 37, 38) permettant de placer le poinçon (8 ; 46 ; 57) en contact avec le film (10) de matériau durcissant, pendant au moins un court moment, et au moins une source de chaleur ou de radiation (7 ; 26), conçue pour fournir de la chaleur ou des radiations au film (10) de matériau durcissant pendant que celui-ci est en contact avec le poinçon (8 ; 46 ; 57).

6. Appareil selon la revendication 5, caractérisé par un dispositif de transport (15, 16) destiné à faire avancer les plaques de verre (8) à traiter dans une direction sensiblement horizontale, dans lequel le poinçon (46, 53) est formé pour correspondre à au moins un segment d'un cylindre, dont l'axe s'étend perpendiculairement à la direction de transport (22), et un dispositif (39, 40, 41) destiné à placer la plaque de verre (8) en contact avec la surface de poinçonnage (46 ; 57), dans lequel la source de chaleur ou de radiations (7 ; 26) est positionnée de telle sorte qu'elle irradie le verre (8) lorsqu'il se trouve en contact avec le poinçon (46 ; 57), et dans lequel, comme ceci a été vu dans la direction de transport (22), des éléments (23, 24) sont disposés sur la face avant et arrière de la source de radiations (7 ; 26) pour absorber la pression exercée par le poinçon (46 ; 57).

7. Appareil selon la revendication 6, caractérisé en ce que le poinçon (46) comprend : un cylindre rigide (44) ; une couche de matériau flexible (45) prévue sur la surface incurvée du cylindre, et une plaque métallique (46) prévue sur la surface extérieure de la couche de matériau flexible (45) et dont la surface est rendue rugueuse en fonction de la rugosité du film transparent (10).

8. Appareil selon la revendication 7, caractérisé en ce que la plaque métallique (46) est un manchon sans couture enfilé sur la couche de matériau flexible.

9. Appareil selon la revendication 8, caractérisé en ce que le cylindre (46) est fermé à ses extrémités, en ce qu'est prévue une fiche destinée à être raccordée à une source de vide, en ce que la surface incurvée du cylindre est perforée, et en ce qu'entre le manchon et la couche de matériau flexible est prévue une couche hermétique qui est hermétiquement reliée aux têtes du cylindre.

10. Appareil selon la revendication 7, 8 ou 9, caractérisé par des moyens (48, 49, 50, 51) permettant que le poinçon (46) exerce une force telle, sur la plaque de verre (10), que la plaque de verre (10) soit entraînée dans la direction de transport.

11. Appareil selon l'une des revendications 6-10, caractérisé en ce qu'entre la source de radiation (26) et la plaque de verre (8), à l'endroit où elle est en contact avec le poinçon (46), une ouverture (entre 23 et 24) s'étendant sur au moins toute la longueur de la plaque de verre (10) a été ménagée, et dont la largeur est variable.

12. Appareil selon la revendication 11, caractérisé par des moyens (32) permettant de régler la largeur de l'ouverture en fonction de la vitesse de transport.

13. Appareil selon l'une des revendications 6-12, caractérisé par des moyens permettant de mettre la plaque de verre (8) en suspension à l'endroit où se trouve le poinçon (46), au moyen d'un coussin d'air.
